# EUROPÄISCHE PATENTSCHRIFT

(11) **EP 3 105 899 B1**
(45) Veröffentlichungstag und Bekanntmachung des Hinweises auf die Patenterteilung: **06.06.2018**
(21) Anmeldenummer: 15702710.3
(22) Anmeldetag: 27.01.2015
(51) Int. Cl.: H04L 29/06, G06F 21/57, G06F 21/44

(54) **VERFAHREN ZUM HOCHFAHREN EINES PRODUKTIONS-COMPUTERSYSTEMS**
METHOD FOR STARTING UP A PRODUCTION COMPUTER SYSTEM
PROCÉDÉ DE DÉMARRAGE D'UN SYSTÈME INFORMATIQUE DE PRODUCTION

(30) Priorität: 13.02.2014 DE 102014101836
(43) Veröffentlichungstag der Anmeldung: 21.12.2016
(73) Patentinhaber: Fujitsu Technology Solutions Intellectual Property GmbH, 80807 München (DE)
(72) Erfinder: CLAES, Heinz-Josef, 61130 Nidderau (DE)
(74) Vertreter: Epping - Hermann - Fischer
(86) Internationale Anmeldenummer: PCT/EP2015/051603
(87) Internationale Veröffentlichungsnummer: WO 2015/121061

(56) Entgegenhaltungen:
- EP-A1- 2 204 754
- US-A1- 2006 179 302
- US-A1- 2008 229 055
- MENEZES A J ET AL: "Handbook of Applied Cryptography, passage", 16. Oktober 1996 (1996-10-16), HANDBOOK OF APPLIED CRYPTOGRAPHY; [CRC PRESS SERIES ON DISCRETE MATHEMATICES AND ITS APPLICATIONS], CRC PRESS, BOCA RATON, FL, US, PAGE(S) 546 - 548, XP002218547, ISBN: 978-0-8493-8523-0 Seite 546, Zeile 1 - letzte Zeile Seite 547, Zeile 3 - Zeile 8 Abbildung 13.1 (b)

## Beschreibung

Verfahren zum Hochfahren eines Produktions-Computersystems Die Erfindung betrifft ein Verfahren zum Hochfahren eines Produktions-Computersystems.
Um ein Produktions-Computersystem mit einem verschlüsselten Dateisystem hochzufahren (zu booten; auch: Bootprozess, Bootvorgang genannt), ist eine sogenannte Passphrase (auch Passwort, Kennwort, Schlüsselwort, Codewort, Losungswort oder Parole genannt) zu Beginn des Bootvorgangs notwendig. Die Passphrase ist ein Schlüssel, der zur Ver- beziehungsweise Entschlüsselung eines verschlüsselten Dateisystems im Produktions-Computersystem verwendet wird, sodass das Produktions-Computersystem vermittels des entschlüsselten Dateisystems einen Bootvorgang durchführen kann.
Die Passphrase muss hierzu bei herkömmlichen Lösungen im Klartext verfügbar sein (beispielsweise von einem autorisierten Benutzer am Produktions-Computersystems eingegeben werden), soll jedoch weder für einen unbefugten Dritten noch, unter Umständen, für einen Systemadministrator des Produktions-Computersystems ersichtlich sein. Auch dürfen die für den Bootvorgang verwendeten Programme von einem Administrator (oder von anderen unbefugten Dritten) nicht manipulierbar sein.

Bisherige Lösungen, wie z.B. in US2006/179302 offenbart, sehen vor, dass ein Benutzer vor dem eigentlichen Bootvorgang die Passphrase direkt (zum Beispiel an einer Konsole) eingibt. Insbesondere bei Servern ist es üblich, vor dem eigentlichen Bootvorgang auf dem verschlüsselten Dateisystem zum Beispiel einen sogenannten Secure Shell-(SSH-)Deamon hochzufahren. Ein Administrator loggt sich dort ein und gibt die Passphrase ein, die dann für die Entschlüsselung des Dateisystems verwendet wird.

Nachteilig an diesen Lösungen ist, dass für die Eingabe der Passphrase eine Person notwendig ist. Diese Person kann beispielsweise ein unbefugter Dritter oder Krimineller sein, welcher sich der Passphrase unbefugt bedient, um Zugang zum Dateisystem des Produktions-Computersystems zu erlangen.

Eine Hinterlegung der Passphrase im System gemäß einer alternativen Lösung stellt jedoch eine zusätzliche Sicherheitslücke dar beziehungsweise stellt den Sinn einer Verschlüsselung grundsätzlich in Frage.

Auch die Verwendung von sogenannten "Trusted Plattform Moduls" (TPM) als weitere Lösung scheidet für ein sicheres Hochfahren eines Produktions-Computersystems aus, da TPM bei diversen Betriebssystemen nur eingeschränkt unterstützt wird und grundsätzliches Misstrauen in die Sicherheit einer derartigen Lösung besteht.

Die Aufgabe der vorliegenden Erfindung besteht somit darin, ein Hochfahren eines Produktions-Computersystems zu ermöglichen, ohne sicherheitskritische Einschränkungen der oben genannten Art in Kauf nehmen zu müssen.

Die Aufgabe wird durch ein Verfahren zum Hochfahren eines Produktions-Computersystems gemäß Anspruch 1 gelöst.

Das Verfahren umfasst die folgenden Schritte:
- Herstellen einer Verbindung zwischen einem Key-Computersystem und dem Produktions-Computersystem,
- Sammeln von Informationen über Systemdaten des Produktions-Computersystems,
- Übertragen der Informationen über die Systemdaten des Produktions-Computersystems an das Key-Computersystem,
- Vergleich der gesammelten Informationen mit im Key-Computersystem hinterlegten Vergleichsinformationen,
- automatisiertes Übertragen einer Passphrase vom Key-Computersystem an das Produktions-Computersystem, falls der Vergleich erfolgreich ist, zum Entschlüsseln von verschlüsselten Dateisystem-Daten, die auf einem Medium gespeichert sind, welches innerhalb des Produktions-Computersystems oder innerhalb eines eingebundenen Speichernetzwerks eingerichtet ist,
- Entschlüsseln der auf dem Medium gespeicherten verschlüsselten Dateisystem-Daten vermittels der Passphrase, sowie
- Laden der entschlüsselten Dateisystem-Daten und Hochfahren des Produktions-Computersystems.

Der Begriff "Produktions-Computersystem" betrifft im Kontext des hier erläuterten Verfahrens ein Computersystem, welches zur Datenverarbeitung eingerichtet ist (d.h. "produktiv" ist). Dabei kann das Produktions-Computersystem ein Desktop-PC, z.B. Arbeitsplatz-Rechner, ein Server oder Serversystem oder jegliche andere Art bekannter Computer-Architekturen sein.

Das vorliegende Verfahren wird initiiert, wenn ein Hochfahren des Produktions-Computersystems erwünscht oder erforderlich ist. Eine mögliche Anwendung findet das Verfahren insbesondere innerhalb eines lokalen Rechnernetzwerks (z.B. Firmen-Netzwerks). Das heißt, das Produktions-Computersystem und das Key-Computersystem müssen einander im Netzwerk finden und miteinander kommunizieren können. Außerhalb des Netzwerks ist bei dieser Anwendung keine Ansprechbarkeit des jeweiligen Computersystems gegeben und damit kein automatisierter Austausch der Passphrase möglich. Das bedeutet, dass ein Produktions-Computersystem nicht entsprechend dem vorliegenden Verfahren vermittels des Key-Computersystems hochgefahren werden kann, wenn das Produktions-Computersystem aus dem lokalen Rechnernetzwerk physisch und/oder logisch entfernt wird. Auf diese Weise kann das vorliegende Verfahren auf eine lokale Erreichbarkeit und Kommunikation zwischen den beiden Computersystemen eingeschränkt sein.

Vorteilhaft umfassen die Informationen über die Systemdaten des Produktions-Computersystems wenigstens eines aus
- Informationen über die vorhandene Hardware,
- Prüfsummen und/oder Dateigrößen von Anwendungsprogrammen,
- Prüfsummen und/oder Dateigrößen des Betriebssystemkerns,
- Vollständige Dateien oder Massenspeicherabzüge.

Der Verfahrensschritt des Sammelns von Informationen über Systemdaten des Produktions-Computersystems dient zum Überprüfen, ob das Produktions-Computersystem vertrauenswürdig und/oder in seiner gegenwärtigen Form (das heißt mit dem gegenwärtigen Systemzustand ausgewählter oder sämtlicher Hardware- sowie Software-Komponenten) dem Key-Computersystem bekannt ist. Dadurch können (und sollen) Manipulationen am Produktions-Computersystem erkannt bzw. stark erschwert werden. Vorteilhaft bilden die gesammelten Informationen solche Systemdaten des Produktions-Computersystems ab, welche im Rahmen eines Bootvorgangs abgefragt, eingebunden und/oder ermittelt werden, z.B. Systemdaten eines Boot-Kernels bzw. Betriebssystemkerns. Auf diese Weise kann eine Manipulation von Komponenten erkannt bzw. stark erschwert werden, welche in den Bootvorgang und ggf. in die Entschlüsselung des verschlüsselten Dateisystems vermittels der Passphrase eingebunden sind, sodass ein unerlaubtes Abgreifen einer Passphrase durch manipulierte Komponenten verhindert werden kann.

Das Sammeln der genannten Informationen kann beispielsweise bei unix-basierten Systemen über "dmidecode", "disk dump" (dd), usw. erfolgen. Die Informationen können mit Vergleichsinformationen im Key-Computersystem verglichen werden. Auf diese Weise wird gewissermaßen ein Fingerabdruck (Footprint) der Hardwarekomponenten sowie der Softwarekomponenten des zu bootenden Systems erstellt. Somit ist ein Gesamtbild des Systemzustands aller in dieser Phase auf dem Produktions-Computersystem vorhandenen Programme beziehungsweise Programmdaten erfassbar, wodurch engmaschige Vergleichsinformationen für einen Vergleich gemäß dem erläuterten Verfahren erstellt werden können.

Es ist alternativ oder ergänzend zu den oben genannten Informationen auch denkbar, weitere Informationen über Programme oder ganze Dateisysteme oder Programme bzw. Dateisysteme selbst zu erfassen und zu übertragen. Dies erschwert Manipulationen am Produktions-Computersystem zusätzlich.

Die gesammelten Informationen über die Systemdaten des Produktions-Computersystems werden weiterhin mit im Key-Computersystem hinterlegten Vergleichsinformationen verglichen. Wenn der Vergleich positiv ist, dann erfolgt ein automatisiertes Übertragen der Passphrase vom Key-Computersystem an das Produktions-Computersystem. Wie bereits oben erläutert ist die Passphrase ein Schlüssel, der zur Verbeziehungsweise Entschlüsselung der Dateisystem-Daten im Produktions-Computersystem verwendet wird. In der Regel wird hierzu ein symmetrisches Verschlüsselungsverfahren verwendet.

Dabei werden die Dateisystem-Daten zunächst mit einem sogenannten Master-Schlüssel verschlüsselt. Der Master-Schlüssel wird aus der Passphrase generiert, durch die Passphrase selbst gebildet oder ist ein von der Passphrase separater Schlüssel, der vermittels der Passphrase seinerseits verschlüsselt wird. Anschließend können die Dateisystem-Daten vermittels dieses Master-Schlüssels wieder entschlüsselt werden.

Die Dateisystem-Daten umfassen gemäß dem hier erläuterten Verfahren zumindest Daten, die zum Hochfahren des Produktions-Computersystems (das heißt für einen Bootvorgang) benötigt werden. Solche Daten können beispielsweise Betriebssystem-Daten, Programm-Daten, Anwender-Daten (zum Beispiel Login-Informationen) usw. sein. In verschlüsselter Form sind die Dateisystem-Daten insofern wertlos (beziehungsweise erfolglos), weil keine Verarbeitung derart durchgeführt werden kann, dass ein erfolgreicher Bootvorgang gestartet wird. Erst in entschlüsselter Form (d.h. im Klartext) können die Dateisystem-Daten erfolgreich geladen und ausgeführt werden, sodass das Produktions-Computersystem hochfahren kann.

"Entschlüsseln" bedeutet bei dem hier erläuterten Verfahren generell, dass eine oder mehrere Komponenten (z.B. Betriebssystem-Komponenten, ein Betriebssystemkern oder Boot-Kernel) des Produktions-Computersystems vermittels der an diese übergebenen Passphrase und ggf. vermittels eines Master-Schlüssels, der seinerseits durch die Passphrase verschlüsselt sein kann, lesend und/oder schreibend auf Dateisystem-Daten, die auf dem Medium gespeichert sind, zugreifen können (und damit z.B. das System booten können).

Ohne Entschlüsselung der verschlüsselten Dateisystem-Daten im Produktions-Computersystem vermittels der übertragenen Passphrase ist somit ein Hochfahren des Produktions-Computersystems blockiert. Ein unbefugter Dritter kann auf das Produktions-Computersystem und etwaige vertrauliche Inhalte nicht zugreifen.

Ein genereller Vorteil des Verfahrens besteht darin, dass das Produktions-Computersystem ohne weiteren Eingriff durch einen Administrator oder eine sonstige Person hochfahren kann. Vielmehr ist keine Person mit Zugriff auf das Produktions-Computersystem erforderlich, die die Passphrase kennt. Dagegen bleibt die Passphrase vorteilhaft während des gesamten Verfahrensablaufs für Personen mit Zugriff auf das Produktions-Computersystem (und unter Umständen auch für Personen mit Zugriff auf das Key-Computersystem) unbekannt. Auf diese Weise kann sichergestellt werden, dass eine sicherheitskritische Passphrase nicht von einer befugten Person missbraucht, von einem Kriminellen gestohlen oder von einer befugten Person an eine unbefugte Person weitergegeben wird. Dennoch ist ein automatisiertes Hochfahren des Produktions-Computersystems via einem automatisierten Übertragen einer Passphrase vom Key-Computersystem an das Produktions-Computersystem möglich.

Der Vergleich von Informationen über Systemdaten des Produktions-Computersystems mit im Key-Computersystem hinterlegten Vergleichsinformationen stellt die Sicherheitshürde zur erfolgreichen Durchführung des Verfahrens dar. Eine Manipulation der auf dem Produktions-Computersystem gesammelten Informationen über Systemdaten zum Umgehen dieser Sicherheitshürde ist zwar beispielsweise über einen manipulierten Boot-Kernel bzw. Betriebssystemkern auf dem Produktions-Computersystem prinzipiell möglich. Allerdings erfordert eine solche Manipulation des Verfahrens weitreichende Veränderungen am Betriebssystemkern im Produktions-Computersystem und erschwert so die Manipulation des Bootvorgangs.

Auch ein (manipulatives) Abziehen von Informationen über Systemdaten des Produktions-Computersystems durch unbefugte Dritte (zum Beispiel Hacker) auf ein Dritt-Computersystem, welches vorspiegelt das Produktions-Computersystems zu sein, um vom Key-Computersystem die sicherheitskritische Passphrase zu erhalten, erfordert umfassende, langwierige Manipulationen, welche unter Umständen prädiktiv ausgelegt sein müssen. Denn bereits kleinste Veränderungen am Systemzustand des Produktions-Computersystems nach einem derartigen Angriff (z.B. durch ein routinemäßig durchgeführtes Sicherheitsskript vor dem Herunterfahren des Produktions-Computersystems) führen zu einem veränderten Systemzustand des Produktions-Computersystems, welcher im Key-Computersystem als Vergleichsinformation hinterlegt wird. Ein Vergleich mit den vorab manipulativ abgezogenen Systemdaten auf dem kriminellen Dritt-Computersystem wird dann scheitern, sodass das Key-Computersystem ein Übertragen der Passphrase an das kriminelle Dritt-Computersystem verbietet.

Auch eine physische Manipulation am Produktions-Computersystem kann beispielsweise durch mechanisch wirksame Versiegelungen am Produktions-Computersystem erschwert beziehungsweise verhindert sowie auffällig gemacht werden.

Vorteilhaft startet bei dem Verfahren der hier erläuterten Art das Produktions-Computersystem ein Minimalsystem, welches einen Zugriff des Key-Computersystems auf das Produktions-Computersystem zum Herstellen der Verbindung erlaubt. Das Minimalsystem stellt gewissermaßen eine Plattform zum Zugriff auf das Produktions-Computersystem dar. Somit ist das Minimalsystem bildlich gesprochen eine "Eingangstüre zu einem leeren Vorraum" des Produktions-Computersystems. Auf dem Minimalsystem kann beispielsweise ein SSH-Deamon laufen.

Das Minimalsystem kann zum Beispiel von einer unverschlüsselten Partition einer Festplatte innerhalb des Produktions-Computersystems gestartet werden. Zur weiteren Sicherheit ist alternativ oder ergänzend hierzu jedoch auch denkbar, dass das Minimalsystem auf einem schreibgeschützten Medium (Read only-Medium wie zum Beispiel USB-Speicher oder CD-Laufwerk) gespeichert ist. Das Produktions-Computersystem kann sich dabei beispielsweise in einem abgesicherten Raum oder Rack befinden. Auf das System ist dann kein direkter Zugriff einer einzelnen Person möglich (Mehr-Augen-Prinzip). Auch das BIOS, in dem das schreibgeschützte Medium zum Starten des Minimalsystems eingetragen ist (Boot Device), ist dann vorteilhaft ebenfalls nicht zugänglich bzw. schreibgeschützt. Das Minimalsystem kann beispielsweise bei unix-basierten Systemen "initrd" oder "initramfs" sein.

Vorteilhaft wird eine Authentifizierung und/oder Autorisierung des Key-Computersystems am Minimalsystem des Produktions-Computersystems abgefragt, wobei die Verbindung zwischen Key-Computersystem und Produktions-Computersystem nur hergestellt wird, wenn die Authentifizierung und/oder Autorisierung des Key-Computersystems am Minimalsystem des Produktions-Computersystems erfolgreich ist.

"Authentifizierung" bedeutet hierbei, dass das Key-Computersystem als solches identifiziert und verifiziert werden kann. "Autorisierung" bedeutet hierbei, dass dem Key-Computersystem als vertrauenswürdiges System ein Verbindungsaufbau erlaubt ist.

Eine Authentifizierung und/oder Autorisierung des Key-Computersystems kann beispielsweise durch eine Hinterlegung von Schlüsseln (sogenannte "Credentials") oder sonstiger Identifizierungsparameter des Key-Computersystems (zum Beispiel IP Adresse, Netzwerkname, usw.) im Produktions-Computersystem erfolgen. Ein Zugriff auf das Produktions-Computersystem ist somit nur dem Key-Computersystem gestattet. Andere Zugriffsversuche (von unbefugten Dritt-Computersystemen) bleiben erfolglos.

Bevorzugt teilt das Produktions-Computersystem gemäß dem vorliegenden Verfahren dem Key-Computersystem eine Bereitschaft zum Hochfahren durch folgende Maßnahmen mit:
- Senden einer vorbestimmten Sequenz an Paket-Daten vom Produktions-Computersystem an das Key-Computersystem, wobei die Paket-Daten eine Identifikation des Produktions-Computersystems umfassen,
- Überprüfen der gesendeten Paket-Daten auf Übereinstimmung mit einer vordefinierten Sequenz im Key-Computersystem.

Derartige Maßnahmen können beispielsweise durch ein sogenanntes Port Knocking vermittels eines Knock-Deamons erfolgen. Dies hat den Vorteil, dass sämtliche im Zusammenhang mit dem Verfahren der hier erläuterten Art stehende Netzwerk-Ports des Key-Computersystems geschlossen sein können, sodass keine laufenden Programme (welche von außen über Netzwerke angreifbar wären) an den Netzwerk-Ports des Key-Computersystems erforderlich sind.

Es ist jedoch alternativ oder ergänzend auch denkbar, dass derartige Maßnahmen einen Austausch von Paketen von einer bestimmten IP-Adresse oder einem bestimmten Netzwerknamen aus umfassen. Selbst wenn derartige Maßnahmen zur Identifikation des Produktions-Computersystems von Personen mit vollem Zugriff auf das Produktions-Computersystem gefälscht oder auf Dritt-Computersysteme übertragen werden, so kann das Key-Computersystem durch einen erfolglosen Vergleich von Informationen über Systemdaten des manipulierten Dritt-Computersystems erkennen, dass es sich nicht um das autorisierte (d.h. vertrauliche) Produktions-Computersystem handelt. Auf diese Weise kann das Key-Computersystem zwar durch gefälschte Identifikationen eines vermeintlichen Produktions-Computersystems generell angesprochen werden, eine Passphrase (welche beispielsweise von einem Hacker abgefischt werden soll) wird jedoch vom Key-Computersystem nicht an das Dritt-Computersystem gesendet.

Vorteilhaft wird die Bereitschaft zum Hochfahren signalisiert, damit das Key-Computersystem erkennen kann, dass das Produktions-Computersystem hochfahren will. Ferner kann das Key-Computersystem entscheiden, ob es die Passphrase schickt oder nicht. Befindet sich das Produktions-Computersystem beispielsweise in einem sicherheitskritischen Fehlerfall (welcher vermittels der gesendeten Packet-Daten kodiert sein kann) und ist ein Hochfahren nicht angezeigt oder verboten, so wird keine Passphrase gesendet.

Vorteilhaft überträgt gemäß dem erläuterten Verfahren das Key-Computersystem wenigstens ein vorbestimmtes Programm auf das Produktions-Computersystem und führt dieses im Produktions-Computersystem aus, wobei vermittels des Programms die Informationen über die Systemdaten des Produktions-Computersystems gesammelt und an das Key-Computersystem übertragen werden.

Vorteilhaft ist das Programm auf einem schreibgeschützten (read-only) Medium im Key-Computersystem gespeichert und kann nicht manipuliert werden. Das Programm ist vorteilhaft statisch gebunden und wird so an das Produktions-Computersystem übertragen. Nach dem Übertragen auf das Produktions-Computersystem wird das Programm dort statisch gebunden (lokal) ausgeführt. Dies verhindert eine Manipulation der Ausführung dieses Programms, z.B. über sogenannte "shared libraries" und somit eine Manipulation am Produktions-Computersystem durch das laufende Programm von außen über Netzwerk. Vorteilhaft ist das Programm auch auf dem Produktions-Computersystem auf einem schreibgeschützten ("read-only") Medium abgelegt. Dies kann bevorzugt durch ein Mehr-Augen-Prinzip geschehen. Alternativ oder ergänzend hierzu kann ein physischer Zugriffsschutz auf die entsprechende Hardware (z.B. Versiegelungen usw.) vorgesehen sein. Dies verhindert eine Manipulation am Programm bzw. an der Hardware oder gar einen Austausch von Hardware.

Alternativ zu einer Übertragung des Programms innerhalb des erläuterten Verfahrens kann ein entsprechendes Programm auch schon vorab auf dem Produktions-Computersystem abgespeichert sein. Auch hier ist das Programm vorteilhaft auf einem schreibgeschützten ("read-only") Medium abgelegt. Dies kann ebenfalls durch ein Mehr-Augen-Prinzip geschehen. Alternativ oder ergänzend kann auch hier ein physischer Zugriffsschutz auf die entsprechende Hardware (z.B. Versiegelungen usw.) mit den entsprechenden Vorteilen vorgesehen sein.

Vorteilhaft wird bei dem Verfahren der erläuterten Art die Passphrase zumindest während der Durchführung des Verfahrens weder in verschlüsselter Form noch in Klartext im Produktions-Computersystem dauerhaft oder wiederherstellbar gespeichert. Die Passphrase wird während des hier erläuterten Verfahrens lediglich (einmalig) als Schlüssel zum Entschlüsseln der Dateisystem-Daten bzw. zum Entschlüsseln eines separaten Master-Schlüssels (welcher wiederum zum Entschlüsseln der Dateisystem-Daten eingesetzt wird) verwendet und nirgendwo im Produktions-Computersystem dauerhaft abgelegt. Vorteilhaft werden auch keine Hash-Werte der Passphrase im Produktions-Computersystem generiert und/oder abgelegt. Dies soll verhindern, dass die Passphrase nach dem Entschlüsseln der verschlüsselten Dateisystem-Daten und nach einem Hochfahren des Produktions-Computersystem durch Angriffe von außen abgefischt werden kann oder auch für Benutzer ersichtlich oder reproduzierbar ist.

Bevorzugt wird bei dem Verfahren der erläuterten Art die Passphrase automatisch im Key-Computersystem erzeugt. Dies kann nach einem vorbereiteten Schema (zum Beispiel Look-up table, vordefinierte Kriterien, usw.), alternativ und/oder ergänzend aber auch aleatorisch (vermittels stochastischer Prozesse) erfolgen. Es ist denkbar, eine erzeugte Passphrase mehrmals oder nur einmalig (d.h. für einen einzigen Bootvorgang) zu verwenden. Es ist denkbar, eine Passphrase lediglich beim Einrichten des Produktions-Computersystems einmalig zu erzeugen, Dateisystem-Daten (oder ggf. einen zusätzlichen Master-Schlüssel) zu verschlüsseln und dann die Passphrase sicher im Key-Computersystem zu hinterlegen, um bei jedem Bootvorgang die Dateisystem-Daten vermittels der Passphrase und ggf. eines Master-Schlüssels unter Anwendung des erläuterten Verfahrens entschlüsseln zu können. Es ist alternativ auch denkbar, bei jedem erneuten Bootvorgang oder zu vorbestimmten Zeitpunkten die Dateisystem-Daten (oder ggf. einen zusätzlichen Master-Schlüssel) mit einer jeweils neu generierten Passphrase zu verschlüsseln und entsprechend in einem oder mehreren nachfolgenden Bootvorgängen wieder zu entschlüsseln.

Ferner ist denkbar, die erzeugte Passphrase durch ein asymmetrisches Verschlüsselungsverfahren (private/public key) nochmals vermittels eines öffentlichen Schüssels (public key) zu verschlüsseln, an das Produktions-Computersystem zu übertragen und dort vermittels eines privaten Schlüssels (privat key) zu entschlüsseln. Unter Umständen ist auch denkbar, eine einzige Passphrase mit mehreren öffentlichen Schlüsseln zu verschlüsseln und an mehrere Produktions-Computersysteme zu schicken, um diese gemäß dem erläuterten Verfahren hochzufahren.

Bevorzugt ist bei dem hier erläuterten Verfahren ein Zugriff eines Benutzers einer ersten Benutzergruppe auf das Produktions-Computersystem nach dessen Hochfahren eingerichtet, jedoch zumindest in einem vorbestimmten Betriebszustand des Key-Computersystems ein Zugriff eines Benutzers der ersten Benutzergruppe auf das Key-Computersystem verhindert.

Ein Benutzer der ersten Benutzergruppe kann ein Hochfahren des Produktions-Computersystems - mangels Kenntnis der notwendigen Passphrase - nicht selbst initiieren. Hierzu ist das erläuterte Verfahren notwendig. Erst nach dem Hochfahren können (unter Umständen lokale) Zugriffsrechte der ersten Benutzergruppe auf das Produktions-Computersystem eingerichtet sein. Ein vorbestimmter Betriebszustand des Key-Computersystems in diesem Sinne ist zur und während der Durchführung des vorliegenden Verfahrens. Das heißt, es ist der ersten Benutzergruppe (z.B. einem Administrator des Produktions-Computersystems) zumindest verboten, auf das Key-Computersystem zuzugreifen, um Passphrasen für die Durchführung des Verfahrens zu generieren oder festzulegen. Es kann aber auch dauerhaft nach Einrichten und Aufsetzen des Key-Computersystems der Zugriff der ersten Benutzergruppe auf das Key-Computersystem verboten sein. Zum Beispiel können zum Verhindern eines Zugriffs über Netzwerk sämtliche Netzwerk-Ports des Key-Computersystems geschlossen sein, sodass das Key-Computersystem keine angreifbaren Programme laufen hat.

Alternativ oder ergänzend ist bei dem Verfahren der hier erläuterten Art ein Zugriff eines Benutzers einer zweiten Benutzergruppe auf das Key-Computersystem eingerichtet, wobei jedoch zumindest in einem vorbestimmten Betriebszustand des Produktions-Computersystems ein Zugriff eines Benutzers der zweiten Benutzergruppe auf das Produktions-Computersystem verhindert wird.

Auch hier ist ein vorbestimmter Betriebszustand des Produktions-Computersystems zur und während der Durchführung des vorliegenden Verfahrens. Das heißt, es ist der zweiten Benutzergruppe (zum Beispiel einem Sicherheitskomitee, welches das Key-Computersystem verwaltet und/oder überwacht) verboten, während des Hochfahrens manipulativ auf das Produktions-Computersystem zuzugreifen. Es kann aber auch dauerhaft nach Einrichten und Aufsetzen des Produktions-Computersystems der Zugriff der zweiten Benutzergruppe auf das Produktions-Computersystem verboten sein. Zum Beispiel können zum Verhindern eines Zugriffs über Netzwerk sämtliche Netzwerk-Ports des Produktions-Computersystems nach dessen Hochfahren geschlossen sein, sodass das Produktions-Computersystem keine angreifbaren Programme laufen hat.

Weitere vorteilhafte Ausführungen sind in der nachfolgenden Figurenbeschreibung offenbart.

Die Erfindung wird anhand mehrerer Zeichnungen näher erläutert.

Es zeigen:
- Figur 1: eine schematisierte Darstellung einer Anordnung eines Produktions-Computersystems und eines Key-Computersystems zur Durchführung eines Verfahrens zum automatisierten Hochfahren des Produktions-Computersystems, sowie
- Figur 2A...2C: ein schematisierte Ablaufdiagramm eines Verfahrens zum automatisierten Hochfahren eines Produktions-Computersystems.

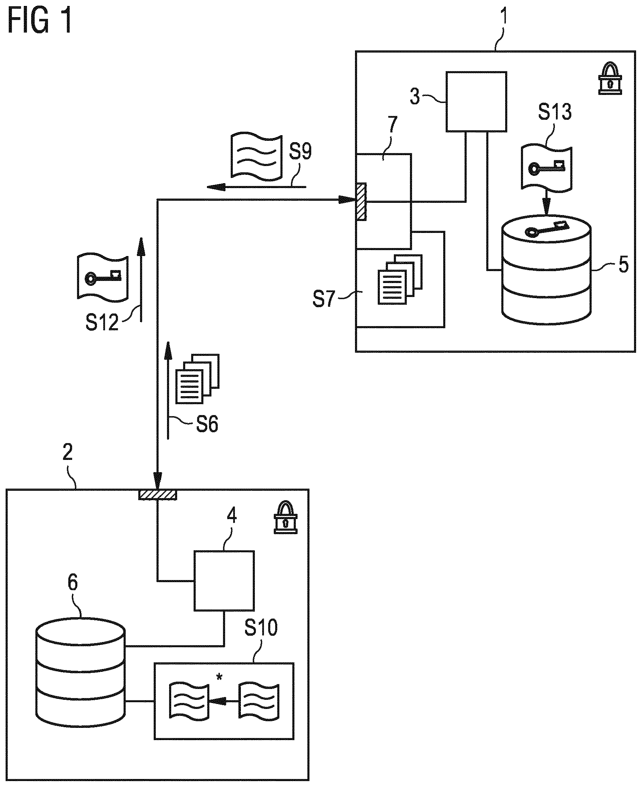

Figur 1 zeigt eine perspektivische Darstellung einer Anordnung eines Produktions-Computersystems 1 und eines Key-Computersystems 2. Eines oder beide Computersysteme können beispielsweise Server darstellen. Die beiden Computersysteme 1 und 2 sind vorteilhaft innerhalb eines lokalen Rechnernetzwerks eingerichtet, sodass beide Computersysteme 1 und 2 einander ansprechen und mit einander kommunizieren können. Hierzu ist eine bidirektionale Datenverbindung zwischen beiden Computersystemen 1 und 2 eingerichtet.

Sowohl das Produktions-Computersystem 1 als auch das Key-Computersystem 2 weisen beispielhaft jeweils (schematisiert dargestellt) eine CPU 3 beziehungsweise 4, d.h. einen oder mehrere Prozessorkerne zur Datenverarbeitung, auf. Ferner weisen beide Computersysteme 1 und 2 beispielhaft jeweils zumindest ein Speichermedium 5 beziehungsweise 6 auf, auf dem Daten gespeichert werden können. Die dargestellten Rechnerarchitekturen sind lediglich beispielhaft. Es ist alternativ zu der dargestellten Konfiguration auch denkbar, die Speichermedien 5 und/oder 6 innerhalb eines Speichernetzwerks (sogenanntes Storage Area Network, SAN) zu organisieren, sodass diese außerhalb der Computersysteme 1 und/oder 2 angeordnet, aber über das SAN eingebunden sind.

Das Produktions-Computersystem 1 kann vornehmlich dazu eingerichtet sein, vorbestimmte Benutzerdaten zu verarbeiten, zu speichern und gegebenenfalls an weitere Produktions-Computersysteme (nicht dargestellt) weiterzuleiten. Somit dient das Produktions-Computersystem 1 dem laufenden Betrieb, beispielsweise als Datenbankserver, Online-Dienstleistungs-Server usw.

Das Key-Computersystem 2 dient übergeordneten Wartungs- und/oder Sicherheitsaufgaben und ist unter anderem dazu eingerichtet, ein gesteuertes automatisiertes Hochfahren des Produktions-Computersystems 1 auszulösen.

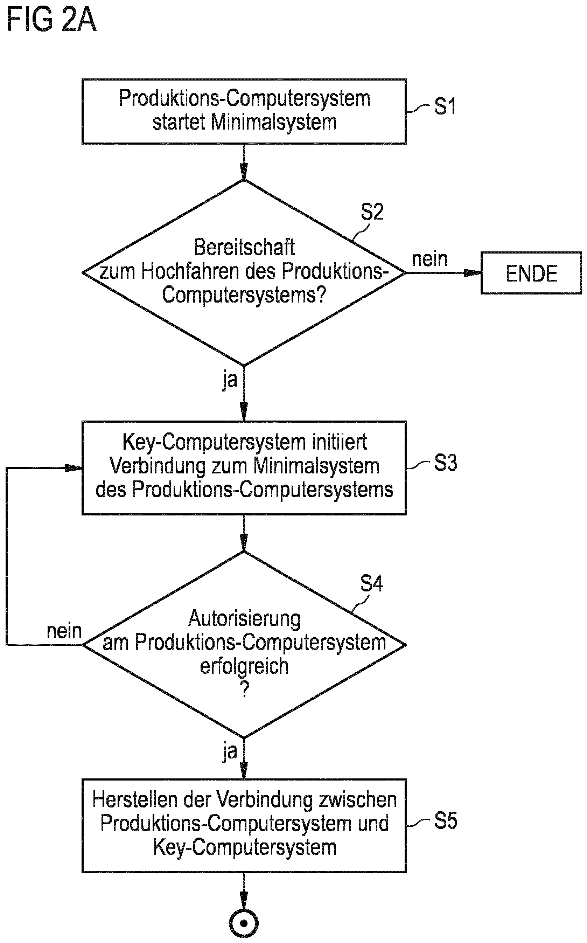

Hierzu wird im Folgenden anhand der Figur 1 in Verbindung mit den Figuren 2A bis 2C der schematisierte Ablauf mehrerer Verfahrensschritte S1 bis S14 veranschaulicht.

In einem Schritt S1 gemäß Figur 2A befindet sich das Produktions-Computersystem 1 in einem Zustand vor dem eigentlichen Hochfahren in einen Hauptbetriebszustand. Dabei kann das Produktions-Computersystem 1 beispielsweise gänzlich ausgeschaltet sein (hard-off) oder in einem Energiesparzustand (soft-off) befindlich sein, in dem sämtliche oder ausgewählte Betriebsmittel beziehungsweise Komponenten des Produktions-Computersystem 1 abgeschaltet sind (beispielsweise CPU 3, Speichermedium 5, Arbeitsspeicher (nicht dargestellt) usw.).

In diesem Zustand soll das Produktions-Computersystem 1 hochgefahren werden. Dazu startet das Produktions-Computersystem ein Minimalsystem 7, welches eine Ansprechbarkeit beziehungsweise eine Zugriffsmöglichkeit via Netzwerk auf das Produktions-Computersystem 1 ermöglicht. Das Minimalsystem 7 kann beispielsweise von einem nicht verschlüsselten Sektor des Speichermediums 5 (beispielsweise von einer Partition einer Festplatte) gestartet werden. Das Minimalsystem 7 umfasst beispielsweise einen SSH-Deamon, der eine Ansprechbarkeit und Zugriffsmöglichkeit auf das Produktions-Computersystem 1 von außen ermöglicht. Auf diese Weise bildet das Minimalsystem 7 eine Plattform für einen Zugriff auf das Produktions-Computersystem 1. Allerdings ist dieser Zugriff in diesem Zustand lediglich beschränkt auf nicht verschlüsselte Daten beziehungsweise Sektoren des Speichermediums 5, welche einen Zugriff vermittels des Minimalsystems 7 zulassen.

Insbesondere ist in diesem Zustand kein Zugriff auf ein verschlüsseltes Dateisystem gestattet, welches im Speichermedium 5 in verschlüsselter Form abgelegt ist. Dieses Dateisystem ist jedoch notwendig zum Hochfahren des Produktions-Computersystems 1.

Im Schritt S2 gemäß Figur 2A wird abgeprüft, ob das Produktions-Computersystem 1 dem Key-Computersystem 2 erfolgreich eine Bereitschaft zum Hochfahren signalisiert, d.h. dem Key-Computersystem 2 erfolgreich mitteilt, dass es booten möchte. Eine Bereitschaft zum Hochfahren des Produktions-Computersystems 1 kann durch dieses beispielsweise signalisiert werden, indem das Produktions-Computersystem 1 eine vorbestimmte Sequenz an Paket-Daten an das Key-Computersystem 2 sendet, wodurch es signalisiert, dass es booten möchte. Dies kann beispielsweise dadurch erfolgen, dass ein Port-Knocking-Prozess über einen Knock-Deamon am Key-Computersystem 2 seitens des Produktions-Computersystems 1 durchgeführt wird. Hierbei ist vorteilhaft, dass am Key-Computersystem 2 sämtliche Netzwerk-Ports geschlossen sein können, sodass am Key-Computersystem 2 keine laufenden und damit angreifbaren Programme für einen Zugriff von außen notwendig sind.

Alternativ oder ergänzend kann das Produktions-Computersystem 1 beispielsweise auch vorbestimmte Identifikationsparameter (beispielsweise IP-Adresse, Netzwerkname etc.) mit dem Key-Computersystem 2 austauschen, wodurch eine entsprechende Bereitschaft zum Hochfahren signalisiert wird.

Falls eine Bereitschaft zum Hochfahren nicht erfolgreich signalisiert wird, so wird das Verfahren beendet. Andernfalls wird zu Schritt S3 gemäß Figur 1 beziehungsweise Figur 2A übergegangen.

In diesem weiteren Schritt S3 initiiert nun das Key-Computersystem 2 eine Verbindung zum Minimalsystem 7 des Produktions-Computersystems 1. Dazu erfolgt zunächst eine Authentifizierung und/oder Autorisierung des Key-Computersystems 2 am SSH-Deamon im Minimalsystem 7. Hierzu können beispielsweise Credentials überprüft oder alternativ oder ergänzend weitere Identifizierungsparameter der Key-Computersystems 2 abgefragt werden.

Falls im Schritt S4 eine Autorisierung des Key-Computersystems 2 am Produktions-Computersystem 1 erfolgreich abgeprüft wurde, wird die Verbindung zwischen dem Produktions-Computersystem 1 und dem Key-Computersystem 2 im Schritt S5 hergestellt, z.B. via SSH am SSH-Deamon des Minimalsystems 7. Andernfalls erfolgt entweder eine erneute Überprüfung der Autorisierung des Key-Computersystems 2 im Schritt S3 gemäß Figur 2A oder alternativ der Abbruch des Verfahrens. Optional kann ein entsprechender Fehlversuch geloggt bzw. gemeldet werden. Dies kann für die Sicherheit des Verfahrens maßgeblich sein.

Nach erfolgreich hergestellter Verbindung im Schritt S5 gemäß Figur 2A kann das Key-Computersystem 2 mit dem Minimalsystem 7 des Produktions-Computersystems 1 kommunizieren und Daten austauschen.

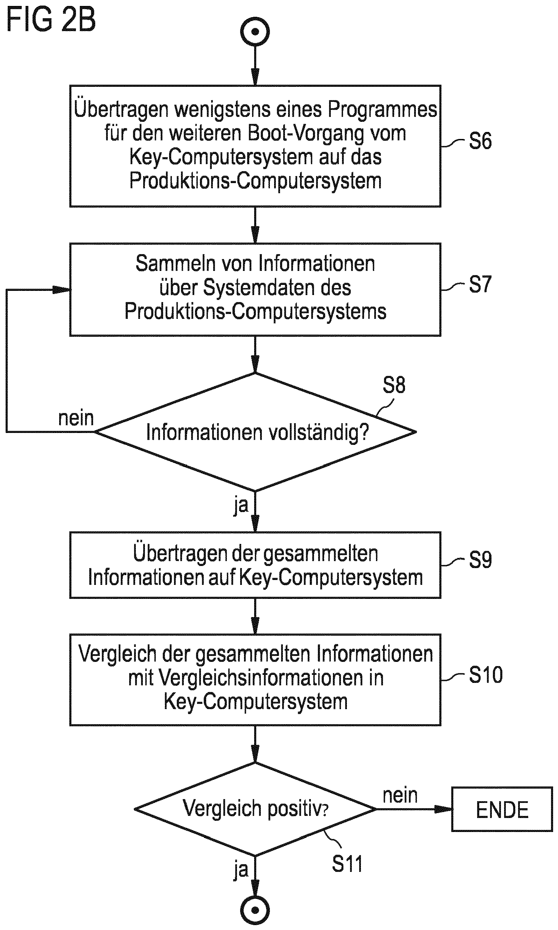

In Schritt S6 gemäß Figur 1 und Figur 2B überträgt das Key-Computersystem 2 wenigstens ein Programm für den weiteren Bootvorgang an das Produktions-Computersystem 1. Dies ist in Figur 1 schematisiert durch ein Versenden mehrerer Programm-Skripte vom Key-Computersystem 2 an das Produktions-Computersystem 1 dargestellt.

In Schritt S7 wird das wenigstens eine Programm, welches vom Key-Computersystem 2 an das Produktions-Computersystem 1 in Schritt S6 übertragen wurde, in das Minimalsystem 7 im Produktions-Computersystem 1 eingebettet und statisch gebunden (lokal) auf dem Produktions-Computersystem 1 ausgeführt. Dies ist in Figur 1 innerhalb des Produktions-Computersystems 1 schematisiert dargestellt. Das Programm kann beispielsweise bei unix-basierten Systemen "dmidecode" und/oder "disk dump" (dd) sein.

Im Schritt S7 werden weiterhin vermittels des nun im Produktions-Computersystem 1 laufenden Programms Informationen über Systemdaten des Produktions-Computersystems 1 gesammelt. Hierzu kann das Programm einen Fingerabdruck sämtlicher Hardware- beziehungsweise Softwarekomponenten des Produktions-Computersystems 1 erfassen und alternativ oder ergänzend hierzu auch Prüfsummen und/oder Datengrößen einzelner oder aller Programmdaten innerhalb des Produktions-Computersystems 1 bestimmen. Auf diese Weise wird ein Gesamtbild des gegenwärtig vorliegenden Systemzustands im Produktions-Computersystem 1 erfasst und entsprechende Informationen gesammelt.

Falls im Schritt S8 festgestellt wird, dass die Informationen vollständig erfasst sind, so werden diese in Schritt S9 auf das Key-Computersystem 2 übertragen. Andernfalls wird der Schritt S7 (Sammeln von Informationen im Produktions-Computersystem 1) weiter ausgeführt. Alternativ zum in Figur 2B dargestellten Ablauf müssen die Informationen nicht zuerst vollständig erfasst werden, bevor sie auf das Key-Computersystem 2 übertragen werden. So ist es denkbar, dass die Informationen in Teilen erfasst werden (vgl. Schritt S7), dann auf das Key-Computersystem 2 übertragen und ggf. dort überprüft werden (vgl. Schritte S9 und S10) und dann die nächsten Teile erfasst (vgl. Schritt S7), übertragen und ggf. überprüft werden (vgl. Schritte S9 und S10), usw.

Der Schritt S9 ist in Figur 1 schematisiert dadurch dargestellt, dass Informationen über den Systemzustand des Produktions-Computersystems 1 in Richtung des Key-Computersystems 2 an dieses übertragen werden.

Weiterhin wird in Schritt S10 ein Vergleich der gesammelten Informationen mit zuvor z.B. auf dem Speichermedium 6 im Key-Computersystem 2 hinterlegten Vergleichsinformationen durchgeführt. Dies ist in Figur 1 schematisiert dadurch dargestellt, dass innerhalb des Key-Computersystems 2 gesammelte Informationen mit hinterlegten Vergleichsinformationen (siehe Stern-Index) verglichen werden. Durch diesen Vergleich soll ermittelt werden, ob das Produktions-Computersystem 1 vertrauenswürdig und/oder in seiner gegenwärtigen Form (das heißt, mit dem ermittelten Systemzustand) dem Key-Computersystem 2 bekannt ist. Somit soll unterbunden werden, dass das Produktions-Computersystem 1 durch einen unbefugten Dritten manipuliert worden ist, um eine sicherheitskritische Passphrase zur Entschlüsselung des verschlüsselten Dateisystems auf dem Speichermedium 5 im Produktions-Computersystem 1 abzufischen.

Denn eine Manipulation des Produktions-Computersystems 1 (beispielsweise durch Schadsoftware, Trojaner, Key-Logger, Phishing-Attacken usw.) würde den Systemzustand des Produktions-Computersystems 1 derart verändern, dass die gesammelten Informationen (siehe Schritt S7 bis S9 gemäß Figur 2B nicht mit vorab ermittelten Vergleichsinformationen innerhalt des Key-Computersystems 2 übereinstimmen.

Falls ein derartiger Vergleich (siehe Schritt S11 in Figur 2B) negativ ist, ist das Produktions-Computersystem 1 für das Key-Computersystem 2 nicht (mehr) vertrauenswürdig, sodass das Verfahren beendet wird. Ein Hochfahren des Produktions-Computersystems 1 vermittels des verschlüsselten Dateisystems ist somit nicht möglich. Ein unbefugter Dritter, welcher gegebenenfalls das Produktions-Computersystem 1 manipuliert hat oder durch ein Dritt-Computersystem versucht eine vertrauenswürdige Quelle vorzuspiegeln, hat dann keinen Zugriff auf das Produktions-Computersystem 1 und etwaige vertrauliche Inhalte, welche auf dem Speichermedium 5 abgelegt sind.

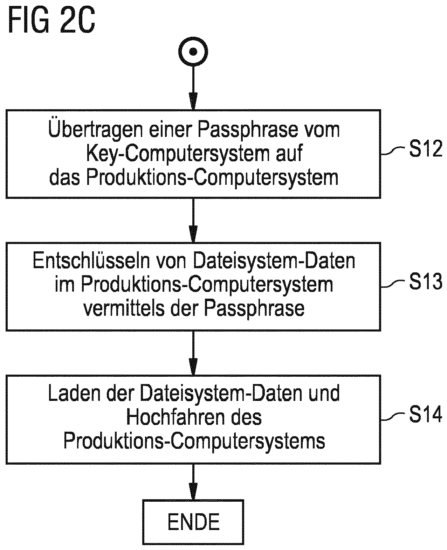

Falls jedoch in Schritt S11 der Vergleich positiv ist, so wird in Schritt S12 gemäß Figur 1 und Figur 2C gewechselt. In Schritt S12 erfolgt schließlich ein automatisiertes Übertragen einer Passphrase vom Key-Computersystem 2 an das Produktions-Computersystem 1. Dies ist in Figur 1 schematisiert dadurch dargestellt, dass ein "Schlüssel" in Schritt S12 vom Key-Computersystem 2 an das Produktions-Computersystem 1 übertragen wird.

Die Passphrase kann ein Master-Schlüssel zum Ver- bzw. Entschlüsseln des verschlüsselten Dateisystems auf dem Speichermedium 5 innerhalb des Produktions-Computersystems 1 sein. Die Passphrase kann dabei durch ein asymmetrisches Krypto-Verfahren (privat/public keys) nochmals verschlüsselt sein, wobei auf Seiten des Produktions-Computersystems 1 die Passphrase entsprechend durch einen privaten Schlüssel entschlüsselt wird und dann als Masterschlüssel im Klartext zum Entschlüsseln des Dateisystems zur Verfügung steht.

Alternativ oder ergänzend ist auch denkbar, dass ein Master-Schlüssel aus der Passphrase generiert wird oder ein von der Passphrase separater Schlüssel ist, der vermittels der Passphrase seinerseits ver -bzw. entschlüsselt wird. Hierbei dient der vermittels der Passphrase ver- bzw. entschlüsselte Master-Schlüssel seinerseits zum Ver- bzw. Entschlüsseln des Dateisystems.

In Schritt S13 erfolgt schließlich ein Entschlüsseln von verschlüsselten Dateisystem-Daten auf dem Speichermedium 5 des Produktions-Computersystems 1. Dies ist in Figur 1 schematisiert dadurch dargestellt, dass innerhalb des Produktions-Computersystems 1 der "Schlüssel" mit dem (zumindest teilweise) verschlüsselten Speichermedium 5 zusammengebracht wird. Die Dateisystem-Daten sind im Klartext erforderlich, um das Produktions-Computersystem 1 hochzufahren. Die Dateisystem-Daten können beispielsweise Programmdaten eines Betriebssystems im Produktions-Computersystem 1 sein. Es ist denkbar, entweder das gesamte Dateisystem zu entschlüsseln oder nur die für einen Prozess (z.B. Bootvorgang) notwendigen Teile. Im letzten Fall wird das Dateisystem nicht als Ganzes entschlüsselt. Die Passphrase wird über entsprechende Tools an zumindest aeine entschlüsselnde Einheit des Produktions-Computersystems 1 übergeben. Diese ver- bzw. entschlüsselt dann je nach Bedarf Teile des Speichermediums 5 (ggf. vermittels eines zusätzlichen Master-Schlüssel wie oben beschrieben).

Nach Entschlüsseln der verschlüsselten Dateisystem-Daten vermittels der übertragenen Passphrase können die Dateisystem-Daten schließlich in Schritt S14 gemäß Figur 2C geladen werden und das Produktions-Computersystem 1 hochgefahren werden. Hierzu kann beispielsweise das Betriebssystem vollständig geladen werden.

Anschließend ist das Verfahren beendet.

Das hier erläuterte Verfahren hat den Vorteil, dass ein Produktions-Computersystem 1 automatisiert unter Kontrolle eines Key-Computersystems 2 hochgefahren werden kann, wobei ein verschlüsseltes Dateisystem durch eine automatisiert vom Key-Computersystem 2 an das Produktions-Computersystem 1 übertragene Passphrase entschlüsselt werden kann. Auf Seiten des Produktions-Computersystems 1 ist keine Person (zum Beispiel Administrator) erforderlich, welche in Kenntnis einer Passphrase einen Bootvorgang am Produktions-Computersystem auslöst. Dies hat den Vorteil, dass eine sicherheitskritische Passphrase nicht an unbefugte Dritte weitergegeben oder von diesen geklaut werden kann.

Eine Passphrase kann vermittels des Key-Computersystems 2 durch eine Benutzergruppe, welche Zugriff auf das Key-Computersystem 2 hat, festgelegt werden. Es ist jedoch auch denkbar, dass die Passphrase automatisiert anhand vorbestimmter Prozesse im Key-Computersystem 2 generiert wird. Dies kann unter Umständen den Vorteil haben, dass keinerlei Benutzer (weder des Produktions-Computersystems 1 noch des Key-Computersystems 2) Kenntnis von einer erzeugten und übertragenen Passphrase hat. Auch dies kann die Sicherheitsmaßnahmen erhöhen.

Vorteilhaft haben lediglich autorisierte Benutzer einer ersten Benutzergruppe Zugriff auf das Produktions-Computersystem 1, jedoch keinen Zugriff auf das Key-Computersystem 2. Ferner haben vorteilhaft autorisierte Benutzer einer zweiten Benutzergruppe Zugriff auf das Key-Computersystem 2, jedoch keinen Zugriff auf das Produktions-Computersystem 1. Ein Zugriff über Netzwerk auf das jeweilige Computersystem 1 oder 2 kann beispielsweise in vorbestimmten Situationen dadurch eingeschränkt sein, dass sämtliche Netzwerk-Ports der Computersysteme 1 beziehungsweise 2 vollständig geschlossen sind, sodass ein Zugriff über Netzwerk nicht möglich ist.

Sämtliche Komponenten gemäß Figur 1 sind lediglich der Einfachheit halber schematisiert dargestellt. Sämtliche Nomenklaturen sind lediglich beispielhaft gewählt. Die dargestellten Rechnerarchitekturen des Produktions-Computersystems 1 sowie des Key-Computersystems 2 sind lediglich beispielhaft gewählt. Der in den Figuren 2A bis 2C dargestellte Verfahrensablauf ist lediglich beispielhaft gewählt und kann vom Fachmann selbstverständlich angepasst oder geändert werden, soweit der Kerngedanke der hier vorliegenden Anmeldung dies zulässt.

### Bezugszeichenliste

- 1: Produktions-Computersystem
- 2: Key-Computersystem
- 3, 4: CPU
- 5, 6: Speichermedium
- 7: Minimalsystem
- S1 bis S14: Verfahrensschritte

## Patentansprüche

1. Verfahren zum Hochfahren eines Produktions-Computersystems (1), umfassend die folgenden Schritte:
- Herstellen einer Verbindung zwischen einem Key-Computersystem (2) und dem Produktions-Computersystem (1),
- Sammeln von Informationen über Systemdaten des Produktions-Computersystems (1),
- Übertragen der Informationen über die Systemdaten des Produktions-Computersystems (1) an das Key-Computersystem (2),
- Vergleich der gesammelten Informationen mit im Key-Computersystem (2) hinterlegten Vergleichsinformationen,
- automatisiertes Übertragen einer Passphrase vom Key-Computersystem (2) an das Produktions-Computersystem (1), falls der Vergleich erfolgreich ist, zum Entschlüsseln von verschlüsselten Dateisystem-Daten, die auf einem Medium (5) gespeichert sind, welches innerhalb des Produktions-Computersystems (1) oder innerhalb eines eingebundenen Speichernetzwerks eingerichtet ist,
- Entschlüsseln der auf dem Medium (5) gespeicherten verschlüsselten Dateisystem-Daten vermittels der Passphrase, sowie
- Laden der entschlüsselten Dateisystem-Daten und Hochfahren des Produktions-Computersystems (1).

2. Verfahren nach Anspruch 1, wobei die Informationen über die Systemdaten des Produktions-Computersystems (1) wenigstens eines aus
- Informationen über die vorhandene Hardware,
- Prüfsummen und/oder Dateigrößen von Anwendungsprogrammen,
- Prüfsummen und/oder Dateigrößen des Betriebssystemkerns,
- Vollständige Dateien oder Massenspeicherabzüge umfassen.

3. Verfahren nach Anspruch 1 oder 2, wobei das Produktions-Computersystem (1) ein Minimalsystem (7) startet, welches einen Zugriff des Key-Computersystems (2) auf das Produktions-Computersystem (1) zum Herstellen der Verbindung erlaubt.

4. Verfahren nach Anspruch 3, wobei eine Authentifizierung und/oder Autorisierung des Key-Computersystems (2) am Minimalsystem (7) des Produktions-Computersystems (1) abgefragt wird und die Verbindung zwischen Key-Computersystem (2) und Produktions-Computersystem (1) nur hergestellt wird, wenn die Authentifizierung und/oder Autorisierung des Key-Computersystems (2) am Minimalsystem des Produktions-Computersystems (1) erfolgreich ist.

5. Verfahren nach einem der Ansprüche 1 bis 4, wobei das Produktions-Computersystem (1) dem Key-Computersystem (2) eine Bereitschaft zum Hochfahren durch folgende Maßnahmen mitteilt:
- Senden einer vorbestimmten Sequenz an Paket-Daten vom Produktions-Computersystem (1) an das Key-Computersystem (2), wobei die Paket-Daten eine Identifikation des Produktions-Computersystems (1) umfassen,
- Überprüfen der gesendeten Paket-Daten auf Übereinstimmung mit einer vordefinierten Sequenz im Key-Computersystem (2).

6. Verfahren nach einem der Ansprüche 1 bis 5, wobei das Key-Computersystem (2) wenigstens ein vorbestimmtes Programm auf das Produktions-Computersystem (1) überträgt und im Produktions-Computersystem (1) ausführt, wobei vermittels des Programms die Informationen über die Systemdaten des Produktions-Computersystems (1) gesammelt und an das Key-Computersystem (2) übertragen werden.

7. Verfahren nach einem der Ansprüche 1 bis 6, wobei die Passphrase zumindest während der Durchführung des Verfahrens weder in verschlüsselter Form noch in Klartext im Produktions-Computersystem (1) dauerhaft oder wiederherstellbar gespeichert wird.

8. Verfahren nach einem der Ansprüche 1 bis 7, wobei die Passphrase automatisch im Key-Computersystem (2) erzeugt wird.

9. Verfahren nach einem der Ansprüche 1 bis 8, wobei ein Zugriff eines Benutzers einer ersten Benutzergruppe auf das Produktions-Computersystem (1) nach dessen Hochfahren eingerichtet ist, jedoch zumindest in einem vorbestimmten Betriebszustand des Key-Computersystems (2) ein Zugriff eines Benutzers der ersten Benutzergruppe auf das Key-Computersystem (2) verhindert wird.

10. Verfahren nach Anspruch 9, wobei ein Zugriff eines Benutzers einer zweiten Benutzergruppe auf das Key-Computersystem (2) eingerichtet ist, jedoch zumindest in einem vorbestimmten Betriebszustand des Produktions-Computersystems (1) ein Zugriff eines Benutzers der zweiten Benutzergruppe auf das Produktions-Computersystem (1) verhindert wird.

## Claims

1. Method of booting a production computer system (1), comprising the following steps:
- establishing a connection between a key computer system (2) and the production computer system (1),
- gathering information about system data of the production computer system (1),
- transmitting the information about the system data of the production computer system (1) to the key computer system (2),
- comparing the gathered information with comparison information stored in the key computer system (2),
- automated transmitting of a passphrase from the key computer system (2) to the production computer system (1), if the comparison is successful, in order to decrypt encrypted file system data stored on a medium configured within the production computer system (1) or within an involved storage network,
- decrypting the encrypted file system data stored on the medium (5) by means of the passphrase, as well as
- loading the decrypted file system data and booting the production computer system (1).

2. Method according to claim 1, wherein the information about the system data of the production computer system (1) includes at least one of
- information about the available hardware,
- checksums and/or file sizes of application programs,
- checksums and/or file sizes of the operating system core,
- complete files or mass core images.

3. Method according to claim 1 or 2, wherein the production computer system (1) starts a minimal system (7) that permits access of the key computer system (2) to the production computer system (1) to establish the connection.

4. Method according to claim 3, wherein authentication and/or authorization of the key computer system (2) is requested at the minimal system (7) of the production computer system (1) and the connection between the key computer system (2) and the production computer system (1) is established only if the authentication and/or authorization of the key computer system (2) at the minimal system of the production computer system (1) is successful.

5. Method according to one of claims 1 to 4, wherein the production computer system (1) communicates readiness for booting to the key computer system (2) by the following measures:
- sending a specified sequence of package data from the production system (1) to the key computer system (2), wherein the package data includes an identification of the production computer system (1),
- verifying the sent package data for conformance with a predefined sequence in the key computer system (2).

6. Method according to one of claims 1 to 5, wherein the key computer system (2) transmits at least one specified program to the production computer system (1) and executes it in the production computer system (1), wherein the information about the system data of the production computer system (1) is gathered by the program and transmitted to the key computer system (2).

7. Method according to one of claims 1 to 6, wherein the passphrase is neither permanently nor recoverably stored in the production computer system (1) neither in encrypted form nor in plaintext at least while performing the method.

8. Method according to one of claims 1 to 7, wherein the passphrase is automatically generated in the key computer system (2).

9. Method according to one of claims 1 to 8, wherein access of a user of a first user group to the production computer system (1) is provided after the booting thereof, but access of a user of the first user group to the key computer system (2) is prevented at least in a specified operating state of the key computer system (2).

10. Method according to claim 9, wherein access of a user of a second user group to the key computer system (2) is provided, but access of a user of the second user group to the production computer system (1) is prevented at least in a specified operating state of the production computer system (1) .

## Revendications

1. Procédé de démarrage d'un système informatique de production (1), comprenant les étapes suivantes :
- établir une connexion entre un système informatique clé (2) et le système informatique de production (1),
- collecte d'informations relatives à des données système du système informatique de production (1),
- transmission des informations relatives aux données système du système informatique de production (1) au système informatique clé (2),
- comparaison des informations collectées avec les informations de comparaison enregistrées dans le système informatique clé (2),
- transmission automatique d'une phrase de passe par le système informatique clé (2) au système informatique de production (1), si la comparaison aboutit à un bon résultat, pour le décodage de données de système de fichiers codées qui sont stockées sur un support (5), lequel est configuré au sein du système informatique de production (1) ou d'un réseau de stockage intégré,
- décodage des données de système de fichiers codées qui sont stockées sur le support (5), au moyen de la phrase de passe, ainsi que
- chargement des données de système de fichiers décodées et démarrage du système informatique de production (1).

2. Procédé selon la revendication 1, **caractérisé en ce que** les informations sur les données système du système informatique de production (1) comprennent au moins un parmi
- des informations sur le matériel disponible,
- des sommes de contrôle et/ou les tailles de fichier de logiciels d'application,
- des sommes de contrôle et/ou les tailles de fichier du noyau de system d'exploitation,
- des fichiers complets ou des copies de la mémoire de masse.

3. Procédé selon la revendication 1 ou 2, **caractérisé en ce que** le système informatique de production (1) fait démarrer un système minimal (7) lequel permet au système informatique clé (2) d'accéder au système informatique de production (1) pour établir la connexion.

4. Procédé selon la revendication 3, **caractérisé en ce qu'**une authentification et/ou une autorisation du système informatique clé (2) est demandée sur le système minimal (7) du système informatique de production (1), la connexion entre le système informatique clé (2) et le système informatique de production (1) ne pouvant être établie que lorsque l'authentification et/ou l'autorisation du système informatique clé (2) sur le système minimal du système informatique de production (1) avait réussi.

5. Procédé selon l'une quelconque des revendications 1 à 4, **caractérisé en ce que** le système informatique de production (1) signale au système informatique clé (2) qu'il est prêt pour le démarrage au moyen des mesures suivantes :
- envoi d'une séquence prédéterminée de données de paquet par le système informatique de production (1) au système informatique clé (2), les données de paquet comprenant une identification du système informatique de production (1),
- vérification des données de paquet envoyées afin de définir si elles concordent avec une séquence prédéterminée dans le système informatique clé (2).

6. Procédé selon l'une quelconque des revendications 1 à 5, **caractérisé en ce que** le système informatique clé (2) transmet au moins un programme prédéterminé au système informatique de production (1) et l'exécute dans le système informatique de production (1), les informations relatives aux données système du système informatique de production (1) étant collectées et transmises au système informatique clé (2) au moyen du programme.

7. Procédé selon l'une quelconque des revendications 1 à 6, **caractérisé en ce que** la phrase de passe n'est pas stockée de manière durable ou récupérable, du moins pendant l'exécution du procédé, que ce soit sous forme codée ou en texte clair, dans le système informatique de production (1).

8. Procédé selon l'une quelconque des revendications 1 à 7, **caractérisé en ce que** la phrase de passe est générée automatiquement dans le système informatique clé (2).

9. Procédé selon l'une quelconque des revendications 1 à 8, **caractérisé en ce que** l'accès d'un utilisateur d'un premier groupe d'utilisateurs au système informatique de production (1) après son démarrage est configuré, toutefois l'accès d'un utilisateur du premier groupe d'utilisateurs au système informatique clé (2) étant empêché dans au moins un état de fonctionnement prédéterminé du système informatique clé (2).

10. Procédé selon la revendication 9, **caractérisé en ce que** l'accès d'un utilisateur d'un deuxième groupe d'utilisateurs au système informatique clé (2) est configuré, mais l'accès d'un utilisateur du deuxième groupe d'utilisateurs au système informatique de production (2) étant empêché au moins dans au moins un état de fonctionnement prédéterminé du système informatique de production (2).
